# FASCICULE DE BREVET EUROPEEN

(11) **EP 0 478 438 B1**
(45) Date de publication et mention de la délivrance du brevet: **13.12.1995**
(21) Numéro de dépôt: 91402534.1
(22) Date de dépôt: 24.09.1991
(51) Int. Cl.: G08G 1/0969

(54) **Récepteur de bord d'aide à la navigation automobile**
Bordempfänger für Fahrzeugsnavigationshilfe
Car navigation aid on-board receiver

(30) Priorité: 28.09.1990 FR 9011993
(43) Date de publication de la demande: 01.04.1992
(73) Titulaire: SOCIETE D'APPLICATIONS GENERALES D'ELECTRICITE ET DE MECANIQUE SAGEM, F-75783 Paris Cédex 16 (FR)
(72) Inventeur: Babsky, Jean, F-95300 Pontoise (FR); Millet, François, F-95520 Osny (FR)
(74) Mandataire: Bloch, Gérard

(56) Documents cités:
- EP-A- 0 346 492
- US-A- 4 409 583
- VEHICLE NAVIGATION & INFORMATION SYSTEMS 11 Septembre 1989, TORONTO, CA pages 475 - 483; M. TSUZAWA ET AL.: 'Advanced mobile traffic information and communication system - AMTICS'

## Description

La présente invention concerne un récepteur de bord d'aide à la navigation automobile destiné à recevoir, par des émetteurs et un canal de radiodiffusion spécifique, des messages codés contenant au moins des localisations de problèmes d'une suite finie de localisations mise en mémoire dans le récepteur et comprenant des moyens de décodage des messages et des moyens de restitution de ceux-ci sous forme accessible à un automobiliste.

On connait déjà, comme système d'aide à la navigation automobile, le système de données radio RDS (Radio Data System) qui, à partir d'émetteurs à modulation de fréquence et par un canal de messages de trafic TMC (Traffic message chanel), transmet à des véhicules équipés d'un récepteur RDS des informations numériques sur les conditions de circulation, la météorologie et d'autres services encore. Ce système est intéressant pour signaler les problèmes de circulation, essentiellement les bouchons, et, plus précisément, leurs localisations.

Le système RDS s'appuye sur une table de référence, contenant notamment des numéros associés de façon biunivoque à des localisations de problèmes prédéterminées. La table des localisations de problèmes (table PL) est mise en mémoire dans le récepteur de bord. Quand un problème surgit, qui peut être décelé par un système automatique, des services de police ou de gendarmerie, des services municipaux, par exemple, il est mis en forme, codé, puis transmis sous forme de trains d'octets par RDS sur le canal TMC.

Un problème peut être défini, ou expliqué, par
- une cause (accident, par exemple),
- un effet ( bouchon, ralentissement ),
- un point A, si le problème est ponctuellement localisé, deux points A et B, si le problème produit son effet entre ces deux points (bouchon, ralentissement), une distance à partir d'un point A (ralentissement, bouchon, depuis ce point sur la distance considérée ), etc.

A l'information sur un problème peuvent être associés un conseil (détournez vous sur X), des informations sur les conditions météorologiques, etc.

Dans le système RDS, tel qu'il est actuellement mis en oeuvre, un récepteur RDS, recevant un message codé de problème, décode sa cause, son effet ainsi que, à l'aide de la table PL mémorisée, le ou les numéros de localisations du problème avant, par synthétiseur, de restituer le message sous forme vocale (ralentissement de A vers B pour cause d'accident, par exemple).

Il existe dans un pays comme la France environ 65 000 localisations de problèmes possibles. On conçoit aisément qu'une restitution sonore de qualité des messages RDS impliquerait donc une mémoire de synthétiseur d'une taille aujourd'hui parfaitement exclue.

La demanderesse a cherché à résoudre ce problème sans pour autant d'ailleurs en limiter la solution à la spécification RDS.

A cet effet, la présente invention concerne un récepteur de bord d'aide à la navigation automobile destiné à recevoir, par des émetteurs et un canal de radiodiffusion spécifique, des messages codés contenant au moins des localisations de problèmes d'une suite finie de localisations mise en mémoire dans le récepteur et comprenant des moyens de décodage de messages et des moyens de restitution de ceux-ci sous forme accessible à un automobiliste, récepteur caractérisé par le fait qu'il comporte une mémoire de stockage de pixels représentatifs de cartes routières, des moyens d'affichage de portions de ces cartes sur des moyens de visualisation et des moyens de restitution graphique des localisations de problèmes des messages sur les moyens de visualisation, agencés pour, quand un problème de circulation produit ses effets sur un tronçon de route entre deux points, matérialiser ce tronçon à problème sur une portion de carte affichée en substituant, aux pixels du tronçon de la portion de carte affichée, des pixels d'une couleur particulière.

Il faut ici préciser qu'une carte mémorisée sous forme d'une matrice ou de matrices de points élémentaires d'image, ou pixels, par exemple une carte scannerisée, se distingue d'une carte vectorisée qui, elle, est mémorisée sous forme de noeuds et d'axes routiers.

Il faut encore préciser que le récepteur de l'invention, dans ses fonctions essentielles, est destiné à s'insérer dans un système, non pas de navigation, mais d'aide à la navigation, c'est-à-dire à recevoir des messages sur les conditions de circulation, en laissant l'automobiliste libre de son parcours, et non sur la manière de se rendre d'un point à un autre.

L'avantage du récepteur de l'invention, comparé à celui de l'art antérieur à restitution vocale des messages, réside dans la visualisation en temps réel des problèmes directement sur des cartes réelles affichées. De plus, la restitution graphique des localisations de problèmes, chacune s'effectuant sur peu de bits, environ un octet, ne nécessite pas une mémoire de traitement de grande capacité.

Le point de départ de l'invention est le système RDS, dans lequel l'affichage de cartes, sous quelque forme que ce soit, n'était absolument pas prévu. L'affichage de cartes était pourtant connu par ailleurs. Dans le système de navigation dit de l'adaptation de carte (map matching), des cartes, synthétiques et non réelles, sont affichées sous forme de traits sur lesquels un automobiliste peut matérialiser la position de son véhicule à l'aide d'un dispositif magnétométrique.

L'activité inventive de la présente invention a donc consisté à partir d'un système d'aide à la navigation du type RDS à le combiner avec une variante d'un système de navigation, a priori incompatibles entre eux, pour proposer un système procurant un résultat jamais atteint par aucun des deux systèmes de l'art antérieur.

On notera que les documents US-A-4 409 583 et "Vehicle Navigation & Information Systems, Toronto, Ontario, 11-13, September 1989, pages 475-483, M. Tsuzawa et al. : advanced monile traffic information and communication system-AMTICS" enseignent bien des systèmes d'aide à la navigation mais qui ne permettent pas la visualisation dynamique en temps réel de problèmes de circulation sur des cartes réelles affichées. Les cartes concernées par ces systèmes de l'art antérieur n'y sont pas mémorisées sous forme de pixels.

Avantageusement, lesdits moyens de substitution de pixels du récepteur de l'invention comportent des moyens de reconnaissance de contours pour reconnaitre ceux dudit tronçon de route à problème.

Avantageusement encore, l'affichage des portions de cartes s'effectue en couleur.

L'invention sera mieux comprise à l'aide de la description suivante d'une forme de réalisation préférée du récepteur de l'invention, en référence au dessin annexé, sur lequel
- la figure 1 est une représentation schématique du récepteur;
- la figure 2 est une illustration de la reconnaissance des contours d'un tronçon de route mise en oeuvre dans le récepteur de la figure 1 et
- la figure 3 est une représentation schématique du système dans lequel s'insère le récepteur de la figure 1.

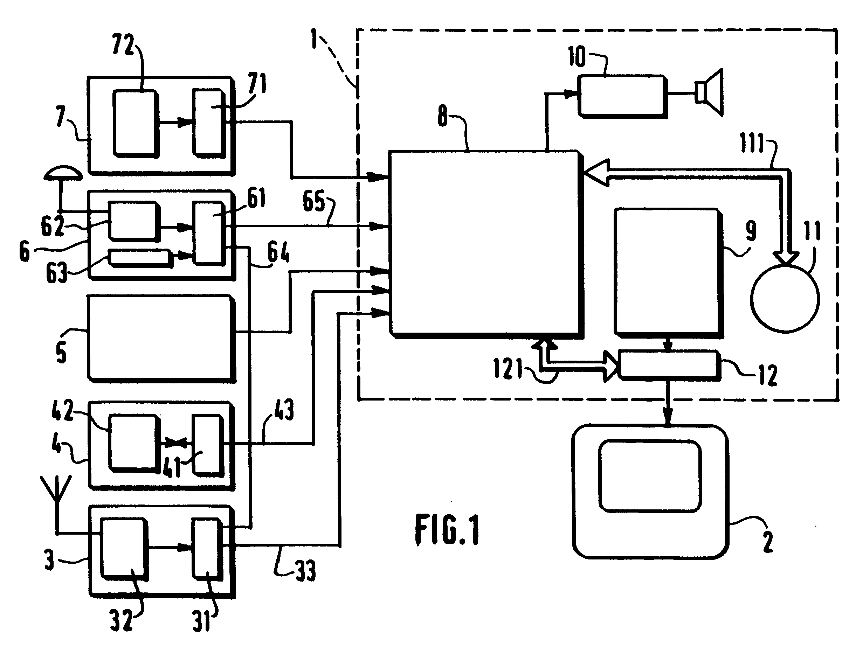

Le système, dans lequel s'insère le récepteur de l'invention et oui va maintenant être décrit en référence à la figure 1, est étendu, dans sa fonctionnalité, bien au-delà des seules caractéristiques revendiquées dans la présente demande. Il ne faut pas pour autant le considérer comme limitatif de l'invention.

Il ne s'agit que d'un système d'aide à la navigation automobile et non pas d'un système de guidage des automobilistes le long d'itinéraires.

Le récepteur, implanté à bord d'un véhicule, comporte
- une unité centrale 1,
- un terminal graphique de visualisation en couleur 2,
- un bloc 3 de traitement de messages radiodiffusés,
- un bloc 4 de détermination du cap du véhicule,
- un bloc 5 de détermination de la distance parcourue,
- un bloc 6 de détermination de la position du véhicule,
- un bloc 7 de services annexes.

L'unité centrale 1 comporte un processeur principal 8, un processeur graphique 9, un bloc 10 de synthèse vocale, relié au processeur 8, une mémoire de masse 11 et une mémoire vidéo 12, ici une RAM, reliée, au processeur principal 8, par un bus 121. Chacun des blocs 3, 4, 6 et 7 comporte ici un microprocesseur 31, 41, 61 et 71, respectivement, dont les mémoires, ROM et RAM, n'ont pas été représentées par souci de clarté. N'ont pas non plus été représentés tous les circuits de liaison inter-processeurs. On notera d'ailleurs que les fonctions de tout ou partie des microprocesseurs 31, 41, 61 et même des blocs 3, 4, 6 pourraient en fait être intégrées à celles du processeur principal 8 de l'unité centrale 1.

Le terminal graphique 2, connecté au processeur graphique 9 par la RAM vidéo 12 et contrôlé par des circuits du processeur 9, constitue l'interface entre l'automobiliste et le récepteur. Il comporte ici un écran couleur à haute résolution d'affichage et de visualisation de portions de cartes routières, des boutons-poussoirs de commande, par exemple pour permettre le défilement de cartes, et des potentiomètres de réglage constituant des désignateurs reliés au processeur 9.

Le bloc 3 de traitement des messages radiodiffusés, ici de type RDS, comporte, relié au microprocesseur 31, un circuit 32 de réception des informations numériques émises par des émetteurs RDS et transmis sur le canal TMC, de décodage de ces informations, de tri des messages pertinents et d'envoi de ces messages au processeur principal 8 de l'unité centrale 1 auquel le microprocesseur 31 est relié par une ligne série 33. Le système RDS est défini dans une spécification de l'Union européenne de radiodiffusion, éditée en mars 1984 et portant la référence Tech. 3244-F.

Le bloc 4 de détermination du cap du véhicule comporte un magnétomètre 42 relié au microprocesseur 41 pour, à partir de la mesure du champ magnétique terrestre, délivrer au processeur principal 8 de l'unité centrale 1, par une ligne série 43, le cap suivi par le véhicule.

Le bloc 5 de détermination de la distance parcourue comporte essentiellement un compteur contrôlé par un odomètre et connecté au processeur principal 8.

L'association de l'information de cap du bloc 4 et de l'information de distance parcourue du bloc 5, toujours dans le cadre de l'aide à la navigation et non d'un guidage, permet une navigation à l'estime destinée à assurer le suivi des portions de cartes routières affichées sur l'écran du terminal 2.

Une telle navigation à l'estime n'est pas suffisamment précise pour pouvoir suivre les cartes pendant plus de quelques dizaines de minutes. Pour éviter que l'automobiliste n'ait alors à recaler périodiquement la position de son véhicule en permanence, en replaçant lui-même à l'écran du terminal graphique 2 la portion de carte sur laquelle il se trouve, la fonction du bloc 6 peut être mise en oeuvre.

Le bloc 6 de détermination de la position du véhicule (global positionning system GPS ) assure, de façon connue, une précision permettant de suivre les cartes quelle que soit la durée du déplacement ou de maintenir en permanence la carte présentée à l'écran centrée sur la position du véhicule.

Le bloc 6 s'insère dans un système de satellites et comporte un circuit de réception 62 relié au microprocesseur 61 aussi relié au processeur principal 8 par une ligne série 65. Pour améliorer encore la précision du bloc GPS 6, jusqu'à quelques mètres, on peut prévoir d'apporter une correction à son résultat. A partir de circuits récepteurs GPS standards fixes implantés au sol, en des points parfaitement connus, on détermine en temps réel les erreurs de position dues aux satellites du système qui sont transmises au circuit de réception mobile 62 pour corriger son résultat. Les informations de correction peuvent être transmises par le système, ici RDS, d'émission des messages radiodiffusés. Il ne s'agit pas d'un gros volume d'informations et le système RDS peut parfaitement l'absorber. Dans le cas d'un bloc de détermination de position ainsi perfectionné, ou bloc GPS différentiel, il est prévu un circuit de correction 63 et une liaison 64 entre les microprocesseurs des blocs 3 et 6.

Le bloc 7 complète le récepteur de l'invention de façon attractive mais non indispensable. Il permet l'accès à des services privés et payants à l'aide d'une carte à mémoire. Le bloc 7 comporte un lecteur bi-standard 72, par exemple du type décrit dans la demande de brevet français 2 638 876 au nom de la demanderesse, relié au microprocesseur 71, lui-même relié au processeur 8, et agencé pour lire indifféremment des cartes à mémoire de type CP8 de faible capacité et non inscriptible ou des cartes à mémoire, de plus grande capacité, allant jusqu'à quelques centaines de milliers de bytes (KB), et éventuellement inscriptibles.

Les services offerts à l'aide du bloc 7 peuvent être divers et variés, comme par exemple l'accès aux informations de correction GPS ou à un système de radiotéléphone. Une carte à mémoire destinée à être utilisée en liaison avec ce bloc 7 peut aussi servir d'anti-vol électronique et même de clef de réglage de certains équipements du véhicule. La carte à mémoire peut également contenir une base de données sur un réseau de services utiles pour un voyage sur route, comme la localisation, par exemple, des hotels, des parkings, des stations-services. Enfin la carte à mémoire peut encore servir de support d'enregistrement d'évènements survenus à bord du véhicule pour mieux assurer sa gestion et sa maintenance.

La mémoire de masse 11 contient toutes les bases de données utiles au fonctionnement du récepteur et notamment les bases de données cartographiques (bit map) pour le terminai graphique 2, plus précisément des pixels représentatifs de cartes routières, par exemple de cartes routières scannerisées.

La mémoire de masse peut contenir les bases de données relatives à un pays entier. Dans ce cas, elle a une très grande capacité de plusieurs centaines de KB (il peut s'agir par exemple d'une mémoire CD ROM) et elle est matériellement indépendante de l'unité centrale 1.

La mémoire 11 peut aussi, comme dans le cas représenté, ne contenir que les bases de données relatives à une région. Elle n'a alors qu'une capacité moyenne (il peut s'agir d'un disque dur) et elle est intégrée à l'unité centrale 1. Elle est téléchargeable et reliée au processeur 8 par un bus 111.

Les localisations de problèmes sont stockées dans la mémoire de masse 11.

Dans sa fonction d'affichage en temps réel des problèmes de circulation sur les portions de cartes affichées à l'écran du terminal 2, le récepteur fonctionne de la manière suivante. Une portion de carte étant affichée à l'écran, dont le centre représente, comme indiqué ci-dessus à propos du bloc 6, la position du véhicule, arrive sur le bloc 3 un message de problème, transmis au processeur 8. Si le problème n'est pas localisé sur la portion de carie alors affichée à l'écran, il ne se passe rien que l'automobiliste puisse percevoir. Par contre, si le problème produit ses effets en un endroit apparaissant à l'écran, le processeur 8 restitue le problème à l'écran et le matérialise sur le fond de carte ici à l'aide d'icones de pointage. Une restitution sonore par le bloc 10 peut être combinée à la restitution graphique. On notera que le récepteur est capable de traiter simultanément plusieurs messages.

On notera encore que, si le suivi des cartes peut être automatique, grâce à la fonction "GPS" ou "GPS différentiel" du bloc 6, il peut aussi ne s'effectuer que de manière semi-automatique, à l'aide de la seule navigation à l'estime des blocs 4, 5, ou même purement manuelle, à l'aide des commandes de défilement du terminal graphique 2.

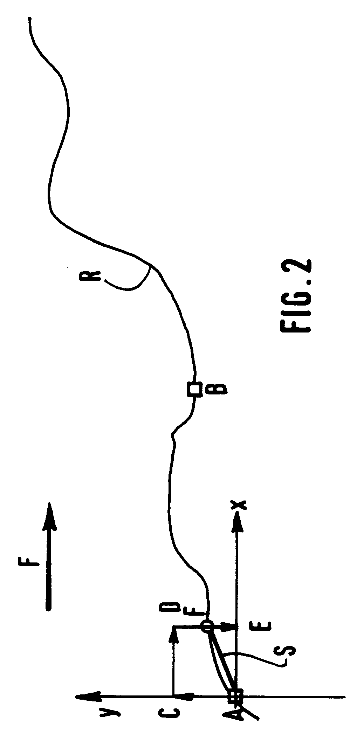

Lorsque le problème produit ses effets sur un tronçon de route, entre deux points précis, le processeur 8, pour la visualisation de ce tronçon, substitue, aux pixels du tronçon considéré de la portion de carte affichée, des pixels d'une couleur particulière, ici des pixels noirs. Cette substitution s'effectue par reconnaissance des contours du tronçon de route de la carte suivant une méthode classique de reconnaissance de contours ou celle qui va maintenant être décrite en référence à la figure 2.

Soit une route R, d'une portion de carte, avec un problème de circulation entre les localisations A et B de cette route, l'utilisateur, en amont du point A, roulant dans le sens de la flèche F orientée de A vers B. Les coordonnées des points A et B sont parfaitement déterminées ainsi que la couleur de leurs pixels. On en déduit un pas d'exploration en X et un pas d'exploration en Y. A partir du point amont A, on explore, dans le premier quadrant, les pixels de la carte le long d'un vecteur AC parallèle à l'axe des Y et de longueur égale au pas en Y, puis d'un vecteur CD parallèle à l'axe des X et de longueur égale au pas en X, puis d'un vecteur DE, parallèle à l'axe des Y, de longueur égale au pas en Y et orienté en sens contraire de celui du vecteur AC.

Si au cours de l'exploration le long de ces trois vecteurs, on ne rencontre aucun pixel de la même couleur que ceux du point A, on recommence de façon similaire dans le deuxième quadrant et ainsi de suite.

Si au cours de l'exploration, on rencontre une suite de pixels adjacents de la même couleur que ceux du point A et en nombre égal ou inférieur à ceux correspondant au point A, ou plus exactement à son épaisseur, c'est-à-dire l'épaisseur du tronçon de route sur la carte, on en déduit qu'il s'agit d'un point du tronçon de route ainsi intersecté, le joint F sur la figure 2, et on substitue aux pixels du segment de droite S entre la localisation de problème amont A et le premier point de route F ainsi reconnu, des pixels d'une couleur ici noire.

Puis on recommence le processus à partir du point F et ainsi de suite jusqu'à la localisation de problème aval B.

Si au cours de l'exploration, on rencontre une suite de pixels adjacents en nombre dépassant celui des pixels du point amont de départ et de la couleur de ceux-ci, ou plusieurs suites non adjacentes de pixels de la couleur de ceux du point de départ, on en déduit que, par exemple, des indications de marquage ont été explorées ou que des tronçons secondaires ont été intersectés et que les pas d'exploration retenus ne sont donc pas bons et on en change pour en adopter de plus petits.

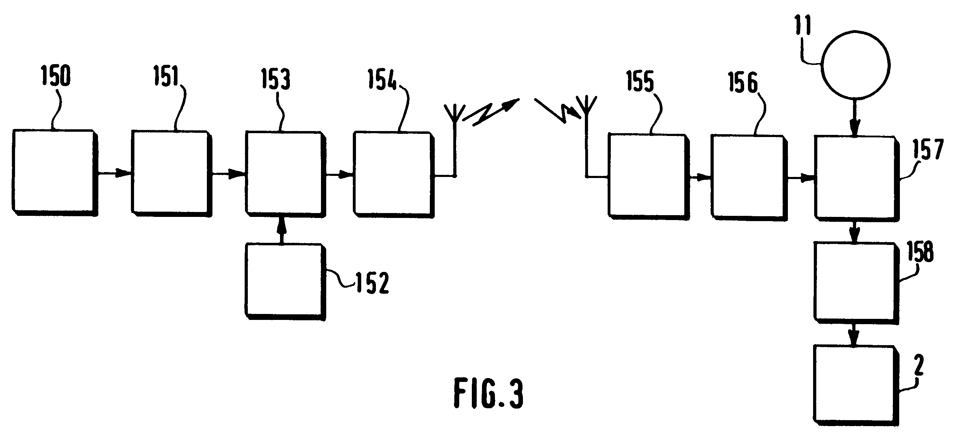

En définitive, le récepteur de l'invention est inséré dans un système global qui permet d'incruster, de façon dynamique et en temps réel, sur un fond de carte, des problèmes de circulation par modification de couleur de tracés de route, le système pouvant être schématiquement défini par la chaîne de la figure 3.

Des moyens 150 de saisie (police, gendarmerie, municipalités,... ) transmettent à un centre de recueil 151 des messages de problèmes. Grâce à une table de référence 152, ces messages sont mis en forme et codés (153) avant d'être émis par des émetteurs 154. Ces messages sont reçus (155) par le récepteur décrit ci-dessus, qui les décode (156) et, grâce aux bases de données cartographiques et aux localisations de problèmes stockées dans la mémoire de masse 11, localise réellement les problèmes (157) et, par reconnaissance de contours (158) les affiche en dynamique sur un écran de terminal de visualisation 2.

## Revendications

1. Récepteur de bord d'aide à la navigation automobile destiné à recevoir, par des émetteurs (154) et un canal de radiodiffusion spécifique, des messages codés contenant au moins des localisations de problèmes de circulation d'une suite finie de localisations mise en mémoire (11) dans le récepteur et comprenant des moyens (32) de décodage de messages et des moyens (8-12, 2) de restitution de ceux-ci sous forme accessible à un automobiliste, récepteur caractérisé par le fait qu'il comporte une mémoire (11) de stockage de pixels représentatifs de cartes routières, des moyens ( 8 ) d'affichage de portions de ces cartes sur des moyens de visualisation (2) et des moyens (8), de restitution graphique des localisations de problèmes de circulation codés par lesdits messages sur les moyens de visualisation (2), agencés pour, quand un problème de circulation produit ses effets sur un tronçon de route entre deux points (A, B), matérialiser ce tronçon à problème sur une portion de carte affichée en substituant, aux pixels du tronçon de la portion de carte affichée, des pixels d'une couleur particulière.

2. Récepteur selon la revendication 1, dans lequel lesdits moyens de substitution de pixels comportent des moyens (8) de reconnaissance de contours pour reconnaitre ceux dudit tronçon de route à problème.

3. Récepteur selon l'une des revendications 1 et 2, dans lequel il est prévu un bloc (3) de traitement de messages radiodiffusés du type RDS.

4. Récepteur selon l'une des revendications 1 à 3, dans lequel il est prévu un bloc (4) de détermination de cap.

5. Récepteur selon l'une des revendications 1 à 4, dans lequel il est prévu un bloc (5) de détermination de distance parcourue.

6. Récepteur selon l'une des revendications 1 à 5, dans lequel il est prévu un bloc ( 6 ) de détermination de position.

## Patentansprüche

1. Bordempfänger zur Kraftfahrzeugnavigationshilfe, der dazu bestimmt ist, über Sender (154) und einen spezifischen Rundfunkkanal kodierte Meldungen zu empfangen, die zumindest Orte von Verkehrsproblemen aus einer endlichen Folge von im Empfänger in einem Speicher (11) gespeicherten Orten zu empfangen, und Mittel (32) zum Dekodieren von Meldungen und Mittel (8-12, 2) zu deren Wiedergabe in für einen Kraftfahrer zugänglicher Form aufweist, dabei ist der Empfänger dadurch gekennzeichnet,
daß er einen Speicher (11) zum Speichern von Straßenkarten darstellenden Pixeln, Mittel (8) zum Darstellen von Teilen dieser Karten auf Darstellungseinrichtungen (2) und Mittel (8) zur graphischen Wiedergabe der Orte der in Form der genannten Meldungen kodierten Verkehrsprobleme auf den Darstellungseinrichtungen (2) aufweist, die ausgebildet sind, um bei Auftreten eines Verkehrsproblems auf einem Straßenabschnitt zwischen zwei Punkten (A, B) diesen Problemabschnitt auf einem dargestellten Kartenteil sichtbar zu machen, indem die Pixel des Abschnitts des dargestellten Kartenteils durch Pixel mit einer besonderen Farbe ersetzt werden.

2. Empfänger nach Anspruch 1,
in dem die genannten Mittel zum Ersetzen von Pixeln Umrißerkennungsmittel (8) zum Erkennen der Umrisse dieses Problemstraßenabschnitts umfassen.

3. Empfänger nach einem der Ansprüche 1 und 2,
in dem ein Block (3) zur Verarbeitung von Rundfunkmeldungen vom Typ RDS vorgesehen ist.

4. Empfänger nach einem der Ansprüche 1 bis 3,
in dem ein Block (4) zur Kursbestimmung vorgesehen ist.

5. Empfänger nach einem der Ansprüche 1 bis 4,
in dem ein Block (5) zur Bestimmung der zurückgelegten Strecke vorgesehen ist.

6. Empfänger nach einem der Ansprüche 1 bis 5,
in dem ein Block (6) zur Standortbestimmung vorgesehen ist.

## Claims

1. On-board receiver for assisting with motor vehicle navigation intended to receive, by transmitters (154) and a specific radio-broadcasting channel, coded messages containing at least locations of traffic problems from a finite sequence of locations stored in a memory (11) in the receiver and comprising means (32) for decoding messages and means (8-12, 2) for restoring the latter in a form accessible to a motorist, the receiver being characterised by the fact that it comprises a memory (11) for the storage of pixels representative of road-maps, means (8) for displaying portions of these maps on visualisation means (2) and means (8) for the graphic restoration of the locations of traffic problems coded by said messages on the visualisation means (2), arranged in order, when a traffic problem produces its effects on a section of road between two points (A, B), to materialise this section having a problem on a portion of map displayed by substituting, for the pixels of the section of the portion of map displayed, pixels of a particular colour.

2. Receiver according to Claim 1, in which said means for the substitution of pixels comprise means (8) for the recognition of contours for recognising those of said section of road comprising a problem.

3. Receiver according to one of Claims 1 and 2, in which a unit (3) is provided for processing radio-broadcast messages of the RDS type.

4. Receiver according to one of Claims 1 to 3, in which a unit (4) is provided for determining the heading.

5. Receiver according to one of Claims 1 to 4, in which a unit (5) is provided for determining the distance covered.

6. Receiver according to one of Claims 1 to 5, in which a unit (6)is provided for determining the position.
